# EUROPÄISCHE PATENTSCHRIFT

(11) **EP 0 287 777 B1**
(45) Veröffentlichungstag und Bekanntmachung des Hinweises auf die Patenterteilung: **08.09.1993**
(21) Anmeldenummer: 88102824.5
(22) Anmeldetag: 25.02.1988
(51) Int. Cl.: B23B 31/20, B23H 7/26

(54) **Vorrichtung zur Halterung von Werkzeugen oder Werkstücken, die einen Zylindrischen Schaft aufweisen**
Clamping device for tools or work pieces having a cylindrical shaft
Dispositif de serrage d'outils ou de pièces, ayant une manche cylindrique

(30) Priorität: 25.02.1987 DE 3706123
(43) Veröffentlichungstag der Anmeldung: 26.10.1988
(73) Patentinhaber: Büchler B-SET AG, CH-9230 Flawil (CH)
(72) Erfinder: Büchler, René, CH-9245 Oberbüren (CH)
(74) Vertreter: EGLI-EUROPEAN PATENT ATTORNEYS

(56) Entgegenhaltungen:
- EP-A- 0 267 352
- DE-A- 3 304 990
- DE-B- 2 425 800
- US-A- 3 919 515
- WECK ; "Werkzeugmaschinen", Band 1,VDI Verlag, Düsseldorf 1980, Seiten 304,305.

## Beschreibung

Die Erfindung bezieht sich auf eine Vorrichtung zur Halterung eines einen Schaft aufweisenden Werkzeuges oder Werkstückes gemäß dem Oberbegriff des Patentanspruches 1.

Eine derartige Vorrichtung ist aus der DE-AS 24 25 800 bekannt. Diese Vorrichtung dient zum Halten einer Elektrode einer Funkenerosionsmaschine. Dort hat das andere Teil bzw. Kupplungsteil, welches fest mit der Funkenerosionsmaschine verbunden ist, eine konische Öffung, in welche ein konusförmiger Schaft des zu haltenden Kupplungs-Teiles eingeführt wird. Die Konizität von Schaft und Kupplungsteil müssen möglichst exakt einander entsprechen. Weiterhin besitzt das Kupplungsteil eine quer verlaufende Öffnung, durch welche eine ein Kupplungsfläche definierende Traverse geführt ist, die ihrerseits eine mittige, viereckige Öffnung besitzt. Der konusförmige Schaft besitzt einen axialen Vorsprung mit einer radialen Verbreiterung, welche durch die viereckige Öffnung der Traverse hindurchgeschoben werden kann und nach Drehung des Schaftes um 90 Grad den Schaft an der Traverse verriegelt.
Das Kupplungsteil besitzt weiterhin ein Außengewinde, welches mit einem Innengewinde einer Überwurfmutter zusammenwirkt. Die Überwurfmutter drückt mit einer Schulter elastische Scheiben gegen die Traverse und zieht damit den Konus des Schaftes in die konische Öffnung des Kupplungsteiles, wobei aufgrund der Elastizität der Scheiben die Anpreßkraft, die auf den Konus wirkt, in gewissem Umfang vom Anzugsmoment der Überwurfmutter entkoppelt ist. Zusätzlich ist an der Öffnung der Überwurfmutter ein weiterer Ring befestigt, der gegen eine Anschlagschulter des Kupplungsteiles zur Anlage kommt, wodurch die Überwurfmutter nur bis zu diesem Anschlag eingedreht werden kann. Beim Lösen der Überwurfmutter wirkt der letztgenannte Ring gegen die Traverse und treibt damit den konusförmigen Schaft aus der konischen Öffnung.

Als Aufnahme für Teile mit einer abweichenden Querschnittsform ist diese bekannte Vorrichtung nicht geeignet. Insbesondere kann mit dieser Vorrichtung nicht die Verbindung zu einem zylindrischen Schaft hergestellt werden.

In der DE 33 04 990 A1 ist eine Spannvorrichtung für Spindeln von Bearbeitungsmaschinen beschrieben, die einen radial spannenden Spannzylinder aufweist, der in einer Konusaufnahme der Spindel angeordnet und mittels einer Überwurfmutter gehalten ist. Der Konusteil ist ungeschlitzt und starr ausgebildet und weist in seinem Inneren eine hydraulisch verformbare Dehnspannhülse auf. Die Überwurfmutter ist drehbar, jedoch axial unverschiebbar zwischen dem Spindelgewinde und dem Angriffsteil für die hyraulische Spannung der Dehnspannhülse abgestützt. Das tatsächliche Einspannen eines Werkstückes oder eines Werkzeuges erfolgt allein durch die Dehnspannhülse. Diese bekannt Spannvorrichtung setzt sich letztendlich aus zwei Spanneinrichtungen zusammen, nämlich einerseits aus der Konusaufnahme und dem Konusteil, der in der Konusaufnahme verspannt ist, und andererseits aus der Dehnspannhülse, mit der ein Werkzeug oder ein Werkstück eingespannt wird.

Die Literaturstelle Weck, M.: "Werkzeugmaschinen", Band 1, VDI-Verlags GmbH, Düsseldorf 1980, S. 304, 305 beschreibt ein Spannfutter mit konischer Aufnahmeöffnung, in die ein konischer Spannzangeneinsatz eingesetzt ist. Der Spannzangeneinsatz besteht aus mehreren Stahlscheiben, die durch Gummizwischenlagen elastisch miteinander verbunden sind, so daß der Spannzangeneinsatz insgesamt nur einen einzigen Körper bildet. Durch einen Spannantrieb wird der Spannzangeneinsatz in den Konus hineingezogen, wodurch auch zylindrische Schäfte bzw. Stangenmaterial gespannt werden kann. Der Spannzangeneinsatz ist durch eine Überwurfmutter gegen Herausfallen gesichert. Anwendungszweck dieser Vorrichtung ist primär die Massenfertigung von Stangenmaterialien auf Ein- und Mehrspindelautomaten, wo der Einsatz einer aufwendigen und teuren Spannvorrichtung zu rechtfertigen ist.

Bei einem anderen bekannten Befestigungssystem können zylindrische Schäfte als Werkzeughalter oder Werkstückhalter verwendet werden. Hierbei wird eine zunächst selbst als Werkstück zu bearbeitende und nach vollzogener Formgebung als Werkzeug einzusetzende Senkelektrode für die Funkenerosion an einer Endfläche eines zylindrischen Schaftes angelötet. Anschließend wird der zylindrische Schaft in ein Spannfutter gesteckt und nach Festlegung seiner Position in bezug auf die Stirnfläche des Spannfutters sowohl hinsichtlich Höhe als auch Umfangsrichtung mittels zweier Stifte, von denen der eine vom zylindrischen Schaft abstehende Stift gegen die Stirnfläche des Spannfutters und zugleich gegen einen anderen von der Stirnfläche axial hervorstehenden Stift anschlägt, festgeklemmt. Zusammen mit dem angelöteten Schaft als eine Handhabungshilfe durchläuft die angehende Senkelektrode alle erforderlichen Bearbeitungsgänge. Anhand desselben Schaftes erfolgt nach ihrer Fertigstellung auch ihr Einsatz als Senkelektrode auf einer Senkerodiermaschine.

Nachteilig an dieser Lösung ist das aufwendige Anlöten des Werkstückes oder Werkzeuges an dem zylindrischen Schaft. Zudem ist das Löten nicht bei allen Werkstoffen möglich. Der in das Spannfutter eindringende, runde Schaft schränkt auch die Kombinationsmöglichkeiten bei der Ankupplung an die Erodiermaschine ein. Bei größeren Schaftdurchmessern werden die Teile aus Schaft und Werkzeug oder Werkstück voluminös, gewichtig und teuer, und auch ihre Aufbewahrung für eine spätere Nachbearbeitung wird erschwert.

Ausgehend von der eingangs genannten Vorrichtung liegt der vorliegenden Erfindung die Aufgabe zugrunde, diese Vorrichtung dahingehend weiterzubilden, daß sie zur Aufnahme auch solcher Schäfte geeignet ist, die eine nicht-konische Form haben.

Diese Aufgabe wird bei einer Vorrichtung der im Oberbegriff des Patentanspruchs 1 genannten Art durch die im kennzeichnenden Teil des Patentanspruchs 1 angegebenen Merkmale gelöst.

Mit der Vorrichtung nach der Erfindung, die insbesondere als integrierender Bestandteil eines Kupplungsteiles ausgebildet ist, ergibt sich wegen des günstigeren Verhältnisses der Kupplungsfläche als Basisfläche zur freien Schaftlänge im Vergleich zu dem bekannten Befestigungsystem eine verbesserte Stabilität. Dies macht auch die Durchführung von Bearbeitungsgängen an den gehalterten Werkstücken oder mittels des gehalterten Werkzeuges möglich, bei denen große Kräfte auftreten, wie z.B. bei Dreharbeiten.

Bei diesen mit starker Krafteinwirkung vor sich gehenden Bearbeitungsgängen tritt auch eine Erwärmung von Werkzeug oder Werkstück auf, was bei der Erfindung in Ermangelung einer Lötverbindung keine Ablösung vom Schaft zur Folge haben kann.

Die Kombination der erfindungsgemäßen Vorrichtung mit der oben beschriebenen Kupplung schafft auch die Möglichkeit für eine Indexierung des am Schaft gehaltenen Gegenstandes, d.h. eine präzise, vorher festgelegte Ausrichtung zwischen Schaft und Kupplungsteil bezüglich einer Drehung um die Längsachse des Schaftes in verschiedenen Drehpositionen. Hierbei kann natürlich auch eine Referenzmarkierung angebracht sein.

Die geteilten Einsatzbuchsen, die ein Festpressen und Festhalten von Schäften unterschiedlichen Durchmessers in der sich leicht konisch verengenden Ausnehmung der Aufnahmehülsen nach Art eines selbsthemmenden Morsekonus gestatten, können durch Druckgießen eines metallischen Werkstoffes, vorzugsweise von Aluminium oder durch Spritzgießen eines geeigneten Kunststoffes rasch und ohne Notwendigkeit einer Nachbearbeitung als billige Wegwerfteile hergestellt werden. Mit Hilfe der erfindungsgemäßen Vorrichtung ist auch eine automatisierte Handhabung der Halteschäfte samt den darin befestigten Gegenständen möglich.

Die Erfindung wird beispielsweise anhand einer bevorzugten Ausführungsform gemäß der Zeichnung näher erläutert.

Es zeigen :
- Fig. 1: einen Axialschnitt durch eine Vorrichtung gemäß der Erfindung in der Schnittebene I-I gemäß der Fig. 2 im Aufriß;
- Fig. 2: die Ansicht der Vorrichtung gemäß der Fig. 1 von unten, wobei in der konischen Ausnehmung der Aufnahmehülse eine zweiteilige Einsatzbuchse mit kreiszylindrischem Innenraum eingesetzt ist;
- Fig. 3: die gleiche Ansicht wie in der Fig. 2, wobei jedoch der Innenraum der zweiteiligen Einsatzbuchse einen Viereckquerschnitt aufweist;
- Fig. 4: einen Axialschnitt durch die Vorrichtung nach der Erfindung, bei der ein Werkstück an einem Schaft fixiert ist;
- Fig. 5: einen Axialschnitt der Vorrichtung nach der Erfindung, zur Darstellung der Befestigung zweier schaftartiger Teile aneinander.
- Fig. 6: einen Axialschnitt der Vorrichtung nach der Erfindung nach einer weiteren Variante der Erfindung;
- Fig. 7: eine Ansicht der Vorrichtung gemäß Fig. 6 von unten, wobei der Schaft rechteckig ist und die zweiteilige Einsatzbuchse keilförmig ist;
- Fig. 8: eine Ansicht ähnlich Fig. 7 jedoch mit vierteilige Einsatzbuchse bei rechteckiger konischer Öffnung;
- Fig. 9: eine Ansicht ähnlich Fig. 7 mit rechteckigem Schaft zweigeteilter Einsatzbuchse bei einer kreisförmigen, konischen Bohrung.

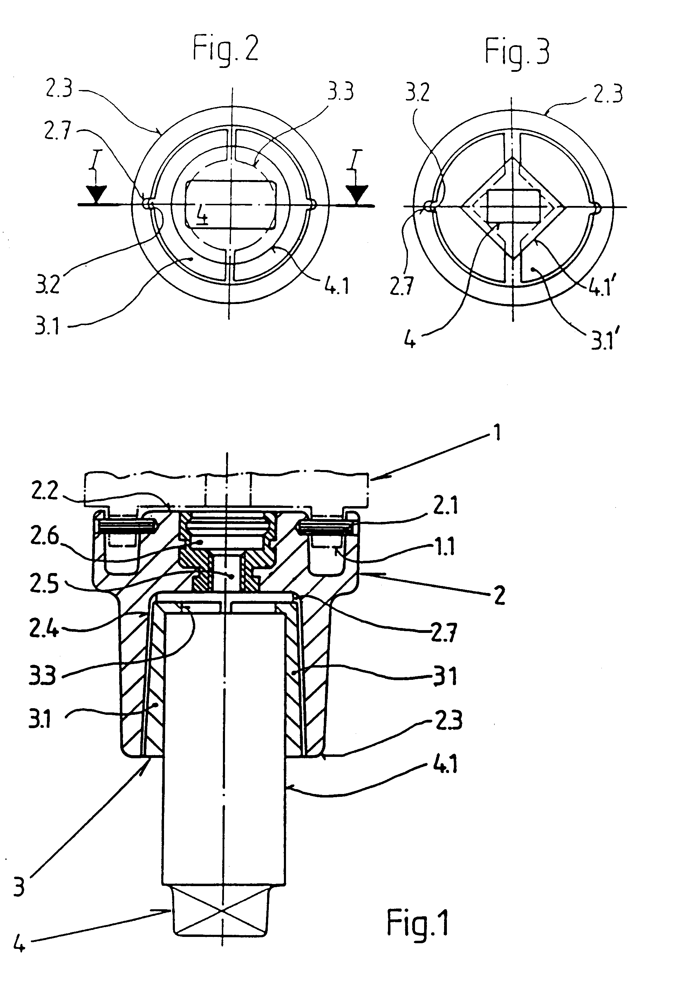

Im oberen Teil der Fig. 1 ist die oben erwähnte Kupplung nach einem nicht veröffentlichen Stand der Technik schematisch dargestellt. Der in oberer Position strichpunktiert angedeutete Kupplungsteil 1 ist an einer nicht gezeigten Senkerodiermaschine fest verankert. Er weist beschränkt elastisch verformbare Übertragungselemente 1.1 auf, in die jeweils ein an dem mit ausgezogenen Linien in unterer Position gezeichneten Kupplungsteil 2 vorgesehenes, starres Profilstück in der Gestalt eines Zylinderbolzens 2.1 eingreift. Dabei wird eine Relativbewegung der beiden Kupplungsteile 1, 2 in den Hauptrichtungen x, y, z des Raums verhindert, wie dies näher in besagter Patentanmeldung beschrieben ist.

An der seiner Kupplungsfläche 2.2 abgewandten Seite des im entkoppelten Zustand frei handhabbaren, unteren Kupplungsteiles 2 ist eine Aufnahmehülse 2.3 mit einer gegen ihr freies End hin offenen Bohrung 2.4 angeformt, die sich leicht konisch in Richtung der Kupplungsfläche 2.2 verengt. In dem der Kupplungsfläche 2.2 zugewandten Boden der Aufnahmehülse 2.3 und koaxial zu deren konischen Bohrung 2.4 befindet sich eine Gewindebohrung 2.5. Im Anschluß an letztere ist eine größere Zylinderbohrung 2.6 in der Fig. 1 sichtbar. Während die größere Zylinderbohrung 2.6 zur Aufnahme einer das Verspannen der beiden Kupplungsteile 1,2 gegeneinander bewirkenden, an sich bekannten Vorrichtung dient, ist die Gewindebohrung 2.5 für ein weiter unten noch zu erläuterndes Hilfswerkzeug vorgesehen. Spannvorrichtung und Hilfswerkzeug sind der besseren Übersichtlichkeit wegen in der Fig. 1 nicht dargestellt.

In die sich konisch verengende Bohrung 2.4 der Aufnahmehülse 2.3 ist eine aus zwei Hälften 3.1 zusammengesetzte Einsatzbuchse 3 eingepreßt. Diese Hälften sind derart ausgebildet, daß sie zusammen eine Außenmantelfläche mit einer Konizität entsprechend derjenigen der Bohrung 2.4 ergeben, während der Innenraum der Einsatzbuchse 3 zylindrisch geformt und an beiden Enden offen ist. In diesem Innenraum ist der ebenfalls zylindrische Schaft 4.1 einer Senkelektrode 4 festgeklemmt. Die beiden Hälften 3.1 der Einsatzbuchse 3 besitzen nach außen radial abstehende Rippen 3.2, die in Axialrichtung an der konischen Außenseite laufen. Die Rippen 3.2 greifen zur Sicherstellung der Lagesymmetrie der Hälften 3.1 der Einsatzbuchse 3 um den Schaft 4.1 je in eine in die Wandung der konischen Bohrung 2.4 eingearbeiteten Nut 2.7 ein (vgl. Fig. 2 und 3).

Mit diesen zwei Rippen ist eine Indexierung um 180 Grad möglich. Statt zweier Rippen kann man auch drei, vier oder mehrere Rippen vorsehen, womit man dann eine Indexierung um
120 Grad, 90 Grad etc. erhält.

Die miteinander zusammenwirkenden konischen Flächen von Einsatzbuchse 3 und Bohrung 2.4 in der Aufnahmehülse 2.3 bewirken mit Hilfe der geteilten Einsatzbuchse 3, die ja nach Art der Spannzange arbeitet, das Festhalten des Schaftes 4.1 der Senkelektrode 4, ähnlich einem selbsthemmenden Morsekonus. Die Darstellungsweise in den Fig. 1 bis 3 mit einem Spalt zwischen den Achnittlinien besagter, in der Wiklichkeit dicht aneinandergepreßter besagter, wurde übersichtlichkeitshalber gewählt.

Im Boden der Einsatzbuchse 3, der bei Aufsetzen auf das Ende jeweils eines Schaftes 4.1 an dessen Endfläche in Anschlag kommt, ist koaxial zum zylindrischen Innenraum der Einsatzbuchse 3 eine Kreisöffnung 3.3 ausgebildet. Der Durchmesser der Kreisöffnung 3.3 ist kleiner als derjenige des Innenraums. Durch die Kreisöffnung 3.3 kann sich ein in die Gewindebohrung 2.5 in dem der Kupplungsfläche 2.2 zugewandten Boden der Aufnahmehülse 2.3 einschraubbares Hilfswerkzeug zum Entfernen eines gehalterten Schaftes 4.1 gegen dessen benachbarte Endfläche stemmen.

Während die Aufnahmehülse 2.3 zweckmäßig durch Druckgießen eines Metalls, vorzugsweise Aluminium, einstückig mit dem unteren Kupplungsteil 2 hergestellt wird, läßt sich die Einsatzbuchse vorteilhaft entweder ebenfalls durch Druckgießen eines metallischen Werkstoffes, vorzugsweise wiederum von Aluminium, oder mittels Spritzgießens eines Kunststoffes anfertigen. Dies gestattet eine schnelle und präzise Herstellung der Teile der Einsatzbuchse 3 mit relativ geringem Aufwand als billige Wegwerfteile, die keiner Nachbearbeitung bedürfen.

Durch Wahl von Einsatzbuchsen 3 mit unterschiedlichen Innendurchmessern wird die Halterung von Elektroden oder sonstigen Werkzeugen und Werkstücken unabhängig vom Durchmesser von deren zylindrischen Schäften ermöglicht.

Die Teile der Haltevorrichtung gemäß der Fig. 3 sind bis auf den viereckigen Schaft 4. 1ʹund den entsprechend geformten Innenraum der Einsatzbuchse 3ʹ, die sich aus den Hälften 3.1ʹzusammensetzt, mit denjenigen in den Fig. 1 und 2 identisch und tragen die gleichen Bezugsnummern.

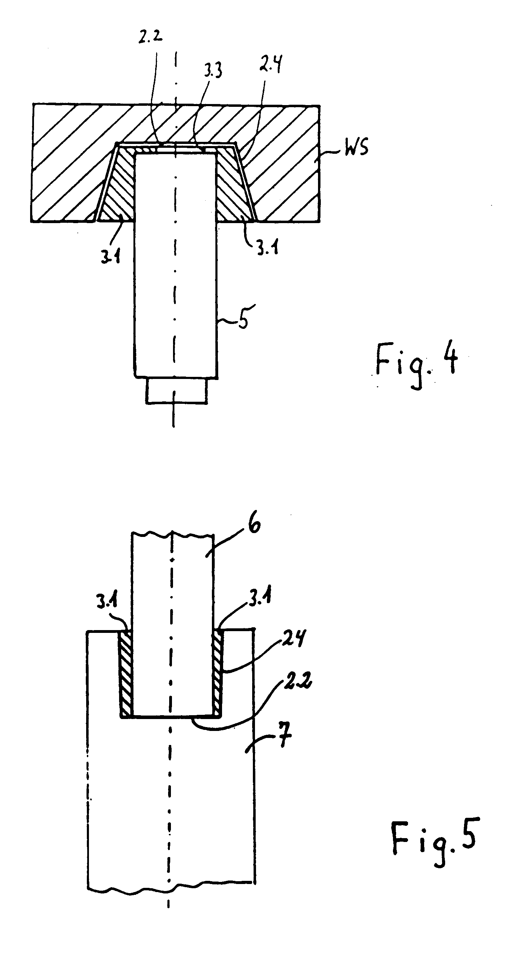

Fig. 4 zeigt die Befestigung eines Werkstückes WS an einem Schaft 5. Das Werkstück besitzt hier eine konische Sacklochbohrung 2.4, die sich von außen nach innen verjüngt. Der Boden der Sacklochbohrung dient hier als Anschlagfläche 2.2. Die Verbindung erfolgt wiederum über eine aus zwei Hälften 3.1 bestehende Einsatzbuchse, die ebenfalls an ihrem Boden die Kreisöffnung 3.3 besitzt. Zum Trennen von Werkstück WS und Schaft 5 kann durch den Schaft 5 hindurch in einer nicht gezeigten Gewindebohrung ein Bolzen eingedreht werden, der die zum Trennen erforderliche Axialkraft aufbringt.

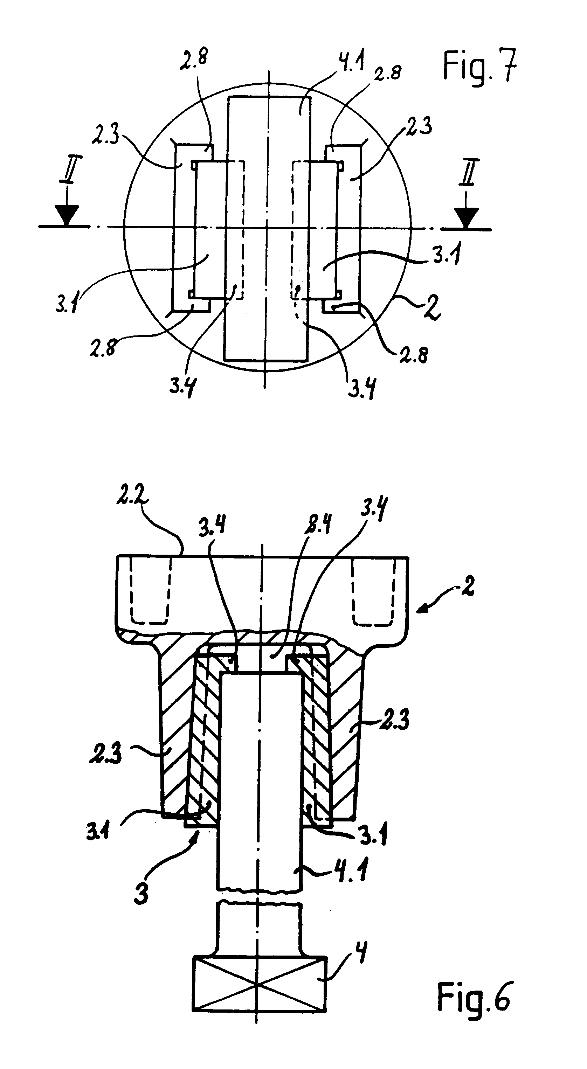

Fig. 5 zeigt, daß die Vorrichtung nach der Erfindung auch zur Verbindung zweier Schäfte 6 und 7 verwendet werden kann. Der eine Schaft 7 hat dabei einen größeren Durchmesser als der andere schaft 6 und besitzt ebenfalls eine konische Sacklochbohrung 2.4, deren ebener Boden als Anschlagfläche 2.2 ausgebildet ist. Die Verbindung erfolgt hier ebenfalls über eine aus zwei Hälften 3.1 gebildete Einsatzbuchse gemäß den anderen Ausführungsbeispielen der Erfindung. Hier ist jedoch die Buchse ohne Boden ausgeführt, so daß das stirnseitige End des Schaftes 6 unmittelbar an der Anschlagfläche 2.2 des anderen Schaftes 7 zur Anlage kommt.

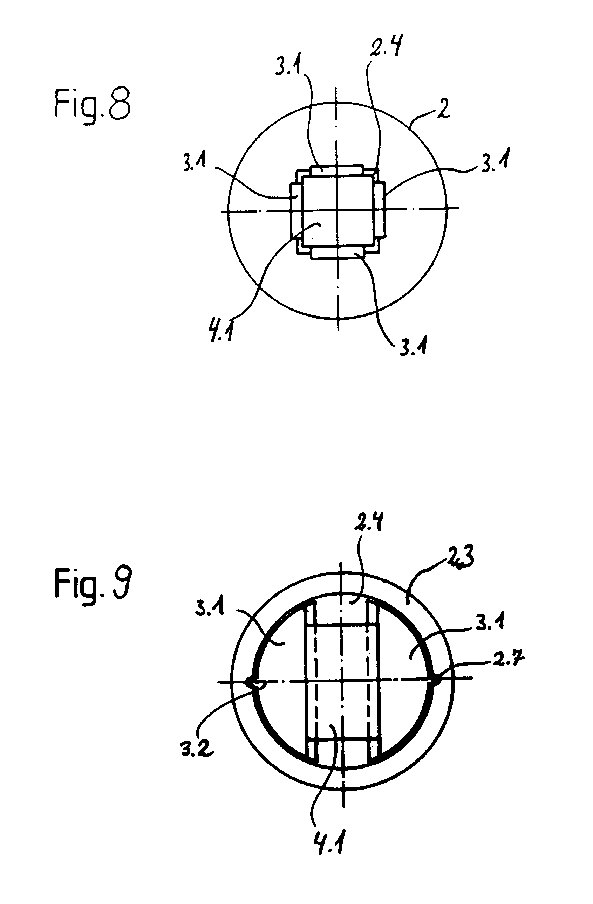

Fig. 6 zeigt einen Axialschnitt der Vorrichtung nach der Erfindung ähnlich Fig. 1, wobei im Unterschied zum Ausführungsbeispiel der Fig. 1 jedoch das Kupplungsteil 2 als Aufnahmehülse (2.3) nur noch zwei im Abstand einander gegenüber liegende Stege 2.3 aufweist, deren einander zugewandte Wände in einem spitzen Winkel zueinander laufen, also einen Konus bilden. Die Randpartien dieser Stege sind - wie Fig. 7 zeigt - durch senkrecht zu den Stegen 2.3 verlaufende Anschläge 2.8 begrenzt. Als Einsatzbuchse 3 werden hier zwei Keile 3.1 verwendet, deren nach außen weisende Fläche der Schräge bzw. dem Konus der Stege 2.3 und deren nach innen weisende Fläche der Form des Schaftes 4.1 angepaßt ist. Im Ausführungsbeispiel der Fig. 6 und 7 ist der Schacht 4.1 rechteckig. Die im Bereich des endes des Schaftes 4.1 liegenden Teile der Keile 3.1 weisen zwei nach innen, d.h zum anderen Keil hin gerichtete Anschläge 3.4 auf, an denen die Stirnfläche des Schaftes 4.1 zum Anschlag kommt.

Fig. 7 zeigt eine Draufsicht von unten auf die Vorrichtung der Fig. 6, wobei Fig. 6 wiederum einen Schnitt längs der Linie II-II der Fig. 7 darstellt.

In einem weiteren Ausführungsbeispiel der Erfindung gemäß Fig. 8 haben sowohl der Schacht 4.1 als auch die Ausnehmung 2.4 je einen quadratischen Querschnitt. Die jeweils einander gegenüberliegenden Seitenwände der Ausnehmung sind unter einem spitzen Winkel zueinander geneigt, womit sich wieder die Konizität ergibt. Die Einsatzbuchse besteht hier aus vier Keilen 3.1, die ansonsten in gleicher Weise ausgebildet sein können, wie die Keile der Fig. 6 und 7.

Fig. 9 zeigt eine weitere Variante der Erfindung, bei der - ähnlich wie bei Fig. 1 und 2 - die konische Ausnehmung 2.4 einen kreisförmigen Querschnitt hat und bei der Schaft 4.1 wieder einen rechteckigen Querschnitt hat. Die Einsatzbuchse besteht aus zwei Kegelstumpfsegmenten, wobei also in Achsrichtung die gekrümmte Außenfläche eine leichte Konizität hat, während die abgeschnittene, zum Schaft 4.1 hinweisende Fläche achsparallel ist. Der Querschnitt der Hälften 3.1 der Einsatzbuchse ist demnach ein Kreisabschnitt (Kreissegment). Auch hier sind - wie bei Fig. 2 - in der Aufnahmehülse 2.3 zwei einander gegenüberliegende Nuten 2.7 und an der Außenseite der Hälften 3.1 der Einsatzbuchse vorstehende Rippen 3.2 vorgesehen, um eine Zentrierung, Führung und Ausrichtung zu erhalten.

## Patentansprüche

1. Vorrichtung zur Halterung eines einen Schaft (4.1) aufweisenden Werkzeuges oder Werkstückes an einem eine Kupplungsfläche (2.2) umfassenden Kupplungsteil (2) einer Kupplung, deren anderes Kupplungsteil (1) an einer Werkzeugmaschine verankert ist, wobei bei miteinander verbundenen Kupplungsteilen (1, 2) die Kupplungsfläche (2.2) des einen Kupplungsteils (2) zu dem anderen Kupplungsteil (1) weist und wobei eines der Kupplungsteile (2) eine Ausnehmung (2.4) umfaßt, die sich konisch in Richtung von ihrer Öffnung zu der Kupplungsfläche (2.2) hin verengt, dadurch gekennzeichnet, daß in die konische Ausnehmung (2.4) eine geteilte Einsatzbuchse (3.1) einbringbar ist, deren äußere Mantelfläche sich entsprechend der konischen Ausnehmung (2.4) verjüngt und die zur Aufnahme des Schaftes (4.1; 5) einen an dessen Außenkontur angepaßten Innenraum aufweist, daß die Einsatzbuchse (3) einen Boden (3.4) aufweist, mit dem das Ende eines in den Innenraum eingesetzten Schaftes (4.1; 5) des Werkzeuges oder Werkstückes in Anschlagseingriff bringbar ist, wobei die Einsatzbuchse zusammen mit dem in ihren Innenraum eingesetzten Schaft (4.1) des Werkzeuges oder des Werkstückes in die Ausnehmung (2.4) einpreßbar ist.

2. Vorrichtung nach Anspruch 1, dadurch gekennzeichnet, daß die Ausnehmung (2.4) in einer Aufnahmehülse (2.3) des an der Maschine verankerten Kupplungsteiles (2) an der der Kupplungsfläche (2.2) des Kupplungsteiles (2) abgewandten Seite vorgesehen ist, und daß die geteilte einsatzbuchse (3.1) einen an seinen beiden Enden offenen, zylindrischen Innenraum aufweist, in den das einzuspannende Ende des Schaftes (4.1) des jeweiligen Werkzeuges oder Werkstückes einsetzbar und damit zusammen mit der Einsatzbuchse (3) in die Ausnehmung (2.4) einpreßbar ist.

3. Vorrichtung nach Anspruch 2, dadurch gekennzeichnet, daß im Boden der Einsatzbuchse (3) eine zentrale Kreisöffnung (3.3) vorgesehen ist, deren Durchmesser kleiner als der des zylindrischen Innenraumes der Einsatzbuchse (3) ist.

4. Vorrichtung nach einem der Ansprüche 1 bis 3, dadurch gekennzeichnet, daß die Einsatzbuchse (3) durch einen Axialschnitt in zwei Hälften (3.1) geteilt ist.

5. Vorrichtung nach einem der Ansprüche 1 und 4, dadurch gekennzeichnet, daß an der äußeren, konischen Mantelfläche der Einsatzbuchse (3) radial vorspringende Rippen (3.2) vorgesehen sind, die in zugeordnete Nuten in der konischen Ausnehmung (2.4) eingreifen.

6. Vorrichtung nach einem der Ansprüche 1, 2, 4 und 5, dadurch gekennzeichnet, daß der Inneraum der Einsatzbuchse (3) eine Vieleckquerschnittsfläche aufweist.

7. Vorrichtung nach einem der Ansprüche 1 bis 6, dadurch gekennzeichnet, daß in dem der Kupplungsfläche (2.2) zugewandten Boden der Aufnahmehülse (2.3) und koaxial zu deren konischer Ausnehmung (2.4) eine Gewindebohrung (2.5) eingearbeitet ist, deren Durchmesser kleiner ist als der der zentralen Kreisöffnung (3.3) im Boden der Einsatzbuchse (3).

8. Vorrichtung nach den Ansprüchen 6 und 7, dadurch gekennzeichnet, daß die Gewindebohrung (2.5) in dem der Kupplungsfläche (2.2) zugewandten Boden der Aufnahmehülse (2.3) eine Querschnittfläche aufweist, die kleiner ist als die Vieleckquerschnittsfläche des Innenraumes der Einsatzbuchse.

9. Vorrichtung nach eine der Ansprüche 1 bis 8, dadurch gekennzeichnet, daß die Einsatzbuchse (3) mindestens aus zwei Metalldruckgussteilen (3.1) oder Kunststoffspritzgussteilen zusammengesetzt ist, die jeweils die Gestalt eines Kegelausschnittes aufweisen.

10. Vorrichtung nach Anspruch 1, dadurch gekennzeichnet, daß die konische Ausnemung (2.4) des Kupplungsteiles (2) durch zwei einander gegenüberliegende, ebene, im spitzen Winkel zueinander verlaufende Wände (2.3) des Kupplungsteiles (2) gebildet ist und daß die Einsatzbuchse (3) aus zwei Keilen (3.1) bestehst (Fig. 6 u. 7).

11. Vorrichtung nach Anspruch 6, dadurch gekennzeichnet, daß die konische Öffnung (2.4) einen viereckigen Querschnitt aufweist und daß die Einsatzbuchse (3) aus vier Keilen (3.1) besteht.

12. Vorrichtung nach Anspruch 1, dadurch gekennzeichnet, daß die konische Öffnung (2.4) einen kreisförmigen Querschnitt hat, daß der Schaft (4.1) einen rechtekkigen Querschnitt hat und daß die einzelnen Teile (3.1) der geteilten Einsatzbuchse (3) im Querschnitt die Form eines Kreissegmentes haben.

## Claims

1. Apparatus for mounting a tool or workpiece, having a shaft (4.1), on a coupling part (2), comprising a coupling surface (2.2), of a coupling whereof the other coupling part (1) is anchored to a machine tool, the coupling surface (2.2) of the one coupling part (2) facing the other coupling part (1) when the coupling parts (1, 2) are connected to one another and one of the coupling parts (2) comprising a cutout (2.4) which tapers comically in the direction from its opening towards the coupling surface (2.2), characterized in that there can be introduced into the comical cutout (2.4) a divided insertion bush (3.1) whereof the outer surface tapers in a manner corresponding to the conical cutout (2.4) and which for receiving the shaft (4.1; 5) has an interior which is matched to the external contour of said shaft (4.1; 5), in that the insertion bush (3) has a floor (3.4) with which the end of a shaft (4.1; 5), inserted into the interior, of the tool or workpiece can be brought into bearing engagement, it being possible to press the insertion bush together with the shaft (4.1), inserted into the interior of said insertion bush, of the tool or the workpiece into the cutout (2.4).

2. Apparatus according to Claim 1, characterized in that the cutout (2.4) is provided in a receiving sleeve (2.3) of the - coupling part (2) anchored to the machine, at the side remote from the coupling surface (2.2) of the coupling part (2), and in that the divided insertion bush (3.1) has a cylindrical interior which is open at both its ends and into which the end to be clamped of the shaft (4.1) of the respective tool or workpiece cam be inserted and together with it cam be pressed with the insertion bush (3) into the cutout (2.4).

3. Apparatus according to Claim 2, characterized in that there is provided in the floor of the insertion bush (3) a central circular opening (3.3) whereof the diameter is smaller than that of the cylindrical interior of the insertion bush (3).

4. Apparatus according to one of Claims 1 to 3, characterized in that the insertion bush (3) is divided by an axial cut into two halves (3.1).

5. Apparatus according to one of Claims 1 and 4, characterized in that there are provided on the outer, comical surface of the insertion bush (3) radially projecting ribs (3.2) which engage in associated grooves in the comical cutout (2.4).

6. Apparatus according to one of Claims 1, 2, 4 and 5, characterized in that the interior of the insertion bush (3) has a polygonal area of cross-section.

7. Apparatus according to one of Claims 1 to 6, characterized in that there is made in the floor of the receiving sleeve (2.3) facing the coupling surface (2.2) and coaxially with respect to the comical cutout (2.4) of said receiving sleeve (2.3) a threaded bore (2.5) whereof the diameter is smaller than that of the central circular opening (3.3) in the floor of the insertion bush (3).

8. Apparatus according to Claims 6 and 7, characterized in that the threaded bore (2.5) has in the floor of the receiving sleeve (2.3) facing the coupling surface (2.2) an area of cross-section which is smaller than the area of polygonal cross-section of the interior of the insertion bush.

9. Apparatus according to one of Claims 1 to 8, characterized in that the insertion bush (3) is composed of at least two metal die-castings (3.1) or plastics injection mouldings which each have the shape of part of a cone.

10. Apparatus according to Claim 1, characterized in that the comical cutout (2.4) of the coupling part (2) is formed by two mutually opposing flat walls (2.3) of the coupling part (2) which run at an acute angle with respect to one another, and in that the insertion bush (3) comprises two wedges (3.1) (Figs. 6 and 7).

11. Apparatus according to Claim 6, characterized in that the conical opening (2.4) has a four-sided cross-section, and in that the insertion bush (3) comprises four wedges (3.1).

12. Apparatus according to Claim 1, characterized in that the conical opening (2.4) has a circular cross-section, in that the shaft (4.1) has a rectangular cross-section, and in that the individual parts (3.1) of the divided insertion bush (3) in cross-section have the shape of a circle segment.

## Revendications

1. Dispositif de serrage de pièces d'un outil ou d'une pièce à usiner présentant un manche (4.1), sur une partie d'accouplement (2) comprenant une surface d'accouplement (2.2) d'un accouplement, dont l'autre partie d'accouplement (1) est ancrée sur une machine outil, où, lorsque les parties d'accouplement (1, 2) sont reliées ensemble, la surface d'accouplement (2.2) d'une des parties d'accouplement (2) est tournée vers l'autre partie d'accouplement (1) et dans lequel l'une des parties d'accouplement (2) comprend un évidement (2.4), allant en rétrécissant de façon conique dans la direction allant de son ouverture à la surface d'accouplement (2.2), caractérisé en ce que, dans l'évidement conique (2.4) est susceptible d'être logée une douille de garniture (3.1) divisée, dont la surface d'enveloppe extérieure va en s'effilant de manière correspondant à l'évidement conique (2.4), et qui présente, pour recevoir le manche (4.1; 5) un espace intérieur adapté à son contour extérieur, en ce que la douille de garniture (3) présente un fond (3.4) avec lequel l'extrémité d'un manche (4.1; 5), inséré dans l'espace intérieur, de l'outil ou de la pièce est susceptible d'être mis en contact de butée, la douille d'accouplement étant susceptible d'être pressée dans l'évidement (2.4) conjointement avec le manche (4.1), inséré dans son espace intérieur, de l'outil, ou de la pièce à usiner.

2. Dispositif selon la revendication 1, caractérisé en ce que l'évidement (2.4) est prévu dans une douille de réception (2.3) de la partie d'accouplement (2) ancrée sur la machine, sur la face, opposée à la surface d'accouplement (2.2), de la partie d'accouplement (2), et en ce que la douille de garniture divisée (3.1) présente un espace intérieur cylindrique, ouvert à ses deux extrémités, dans lequel l'extrémité à serrer du manche (4.1) de l'outil ou de la pièce respective est susceptible d'être introduit et ainsi d'être pressé, conjointement avec la douille de garniture (3), dans l'évidement (2.4).

3. Dispositif selon la revendication 2, caractérisé en ce que dans le fond de la douille de garniture (3) est prévue une ouverture circulaire (3.3) centrale, dont le diamètre est inférieur au diamètre de l'espace intérieur cylindrique de la douille de garniture (3).

4. Dispositif selon l'une des revendications 1 à 3, caractérisé en ce que la douille de garniture (3) est divisée en deux moitiés (3.1), au moyen d'une coupure axiale.

5. Dispositif selon l'une des revendications 1 et 4, caractérisé en ce que, sur la surface d'enveloppe conique extérieure de la douille de garniture (3) sont prévues des nervures (3.2) faisant saillie radialement, s'engageant dans des rainures associées ménagées dans l'évidement conique (2.4).

6. Dispositif selon l'une des revendications 1, 2, 4 et 5, caractérisé en ce que l'espace intérieur de la douille de garniture (3) présente une surface de section transversale polygonale.

7. Dispositif selon l'une des revendications 1 à 6, caractérisé en ce que dans le fond, tourné vers la surface d'accouplement (2.2), de la douille de réception (2.3), et coaxialement à son évidement conique (2.4), est usiné un taraudage (2.5) dont le diamètre est inférieur à celui de l'ouverture circulaire (3.3) centrale ménagée dans le fond de la douille de garniture (3).

8. Dispositif selon les revendications 6 et 7, caractérisé en ce que le trou taraudé (2.5) présente dans le fond, tourné vers la surface d'accouplement (2.2), de la douille de réception (2.3) une surface de section transversale plus petite que la surface de section transversale polygonale de l'espace intérieur de la douille de garniture.

9. Dispositif selon l'une des revendications 1 à 8, caractérisé en ce que la douille de garniture (3) est composée d'au moins deux pièces métalliques (3.1) réalisées par moulage sous pression, ou de pièces en matière synthétique réalisées par moulage par injection, présentant chacune la forme d'un évidement conique.

10. Dispositif selon la revendications 1, caractérisé en ce que l'évidement conique (2.4) de la partie d'accouplement (2) est formée de deux parois (2.3) placées en face, faisant entre elles un angle aigu, de la partie d'accouplement (2) et en ce que la douille de garniture (3) est composée de deux coins (3.1) (figures 6 et 7).

11. Dispositif selon la revendications 6, caractérisé en ce que l'ouverture conique (2.4) présente une section transversale tétragonale et en ce que la douille de garniture (3) est composée de quatre coins (3.1).

12. Dispositif selon la revendications 1, caractérisé en ce que l'ouverture conique (2.4) présente une section transversale circulaire, en ce que le manche (4.1) présente une section transversale rectangulaire et en ce que les parties individuelles (3.1) de la douille de garniture (3) divisée ont une section transversale ayant la forme d'un segment de cercle.
